# EUROPEAN PATENT SPECIFICATION

(11) **EP 2 815 124 B1**
(45) Date of publication and mention of the grant of the patent: **01.05.2019**
(21) Application number: 13738139.8
(22) Date of filing: 16.01.2013
(51) Int. Cl.: H02J 50/00, H01F 38/14, F03B 17/06, F03B 13/26, F03B 13/10, E02B 9/08, F03B 13/18

(54) **ENERGY PLANT AND PARTS OF AN ENERGY PLANT**
ENERGIEANLAGE UND TEILE EINER ENERGIEANLAGE
INSTALLATION DE PRODUCTION D'ÉNERGIE ET PARTIES D'UNE INSTALLATION DE PRODUCTION D'ÉNERGIE

(30) Priority: 16.01.2012 FI 20125048
(43) Date of publication of application: 24.12.2014
(73) Proprietor: Subsea-Energy Oy, 90230 Oulu (FI)
(72) Inventor: SILTALA, Timo, FI-40500 Jyväskylä (FI)
(74) Representative: Heinonen & Co
(86) International application number: PCT/FI2013/050046
(87) International publication number: WO 2013/107934

(56) References cited:
- WO-A1-2006/118482
- WO-A1-2007/019608
- WO-A1-2007/019608
- WO-A1-2009/048339
- WO-A2-2008/138336
- GB-A- 499 037
- GB-A- 2 412 143
- GB-A- 2 412 143
- GB-A- 2 471 863
- US-A1- 2004 201 223
- US-A1- 2010 193 447
- US-B1- 6 323 563

## Description

### Field of invention

The invention pertains to underwater energy plants utilizing water movement due to e.g. waves, tide or stream. The invention also relates parts of such a plant, namely an underwater wing for capturing energy of water movement, apparatus to convert the mechanical energy to electrical energy, and a connector for transferring the electrical energy.

### Background technology

A prior art solution for providing a wave energy plant is disclosed in document WO2004/097212. The wave energy plant has two or more production units and the water mass of the water basin is adapted to actuate production units or their parts submersed at the bottom of the water basin. The production units are used for transforming the kinetic energy of the water mass into other form of energy like electric energy, mechanical energy or pressure of an intermediate agent.

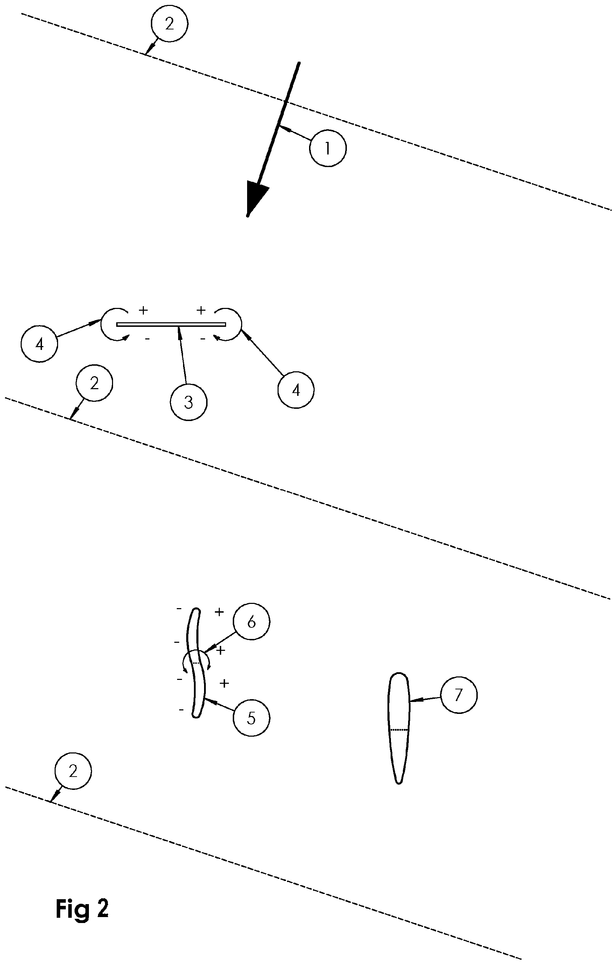

Certain problems are related to the prior art wave energy plants. Any profile in flow causes forces due to increased pressure on the flow side and decreased pressure (suction) on the other side. The suction is more important, causing typically up to 2/3 of the pressure forces. Underwater flaps as presented in WO 2004/097212 A1 utilize stagnation pressure against a plate-like body. It develops overpressure to the front/flow side of the plate but the more important suction on the opposite side does not develop effectively because there is no increased flow velocity along the opposite surface. In addition, the flow around the side edges (see 4 of the enclosed Figure 2) causes turbulence and reduces the small back side suction even further. When the plate turns down from vertical position the flow direction turns away from the normal of the surface, thus reducing the pressure difference development even further. Also in case of angle of attack of flow not being straight against the axis line of plate, flow around the leading edge reduces the efficiency even further.

When energy of water movement is captured to moving surfaces like planes or wings, or floating volumes like buoys, there is a problem of very slow speed with high forces. Therefore straight drive generators would be extremely large machinery due to magnetic saturation and increase of speed is needed. This is usually provided with separate hydraulics. Current hydraulic transmission systems in bottom or intermediate water have long pipework lines with flexible hoses and several connectors and valves. This causes following problems:
- The flow resistance heats up the hydraulic fluid which needs to be cooled in separate coolers or cooling lines which in turn add more flow resistance to the system.
- Increased flow resistance cuts the system's ability to react to and capture transient energy peaks. Dimensioning according to these peaks would make system oversized for average use and with average duty dimensioning pressure has to be released with pressure limiting valves thus loosing provided energy.
- Long lines make efficient use of hydraulic accumulators difficult.
- All components and lines also add space requirements and size, thus increasing costs.
- Generator systems regularly stopping and restarting with waves cause harmful peaks to mains network lowering the usability of entire plants.

The underwater electric connections are done with technology known from dry environment and they are therefore impractical in underwater environment. They are also impossible to connect/disconnect while generators are running. Making high power connections in wet environment by divers, remotely operated underwater vehicles or other remote equipment is also too risky because of possible electric leaks and shortages. Therefore replacing non-functional units is very costly and requires shutdown of entire plant.

As a consequence, the systems are very difficult to maintain on site as would be preferred.

Patent publications WO 2007/019608 A1, US 2004/201223 A1 and GB 2412143 A respectively disclose power extracting apparatus from moving water and apparatus for extracting or generating power, in accordance of the pre-amble part of the independent claims.

### Summary of the invention

The object of the invention is to provide new solutions for providing an energy plant and parts of an energy plant for utilizing water movement, with which the problems of the prior art energy plants can be avoided or reduced.

According to one aspect of the invention the object is achieved with an underwater wing of an energy plant for capturing energy from water movements into reciprocating motion of the wing, which is characterised in that the wing has a non-planar profile. The wing profile has preferably such a form that high lift with low friction is achieved.

According to another aspect of the invention the object is achieved with a converter for converting mechanical energy into electrical energy in an energy plant utilizing water movement, which converter is characterised in that the converter is a hinge-type converter comprising a cover and a shaft within the cover, which shaft and cover can rotate in relation to each other, the converter further comprising:
- a mechanical or hydraulic transmission for increasing the relative speed of rotation; and
- an electric generator driven by said rotation.

According to further aspect of the invention the object is achieved with a connector for transmission of electrical energy in underwater environment, which connector is characterised in that the connector comprises means for transferring electrical energy using magnetic induction between two halves of the connector, wherein the connector has a ferromagnetic core, which is split into two parts, one in each of the connector halves, which are at least partially closed in watertight housings.

According to further aspect of the invention the object is achieved with an energy plant utilizing water movements caused by water waves, tide or currents for providing electrical energy, comprising at least one energy production unit, the energy production unit comprising an underwater wing for capturing mechanical energy from water movements into reciprocating motion of the wing, and an energy converter for converting the mechanical energy into electrical energy when the underwater wing applies a rotational force to the converter, which energy plant is characterised in that the production unit comprises at least one of:
- an underwater wing according to the invention;
- a hinge-type energy converter according to the invention; and
- an induction connector according to the invention.

Some preferable embodiments of the invention are described in dependent claims.

According to the invention the profile form of the underwater wing is asymmetric. According to the invention the asymmetric wing profile has two leading edges mirrored as this structure is preferably used in wave energy plants where the flow has reciprocating direction. A symmetric wing profile is preferably used in tide or river streams where the flow direction is constant for a long time and the reciprocal movement of the wing is achieved by adjusting the angle of attack by turning the wings around their support axis, for example.

The wing preferably has a form where water flow causes forces according to reaction principle, as known from e.g. reaction turbines. Such a wing has a profile in which a flowing water causes reaction forces that are larger than action forces, which are known from e.g. impulse turbines. More particularly, wing profiles of the plant preferably have such forms and are in such positions that the force component caused by the water flow on the wing profile is smaller in the direction of the of the water flow than the force component in the direction which is orthogonal to the direction of the water flow. In other words, lift force caused by the water flow is higher than force caused by stagnating pressure. The form and position of the wing is preferably optimized so that the lift force provides maximum energy from the water flow with minimum drag. In another embodiment of the invention the surface angle of attack of the wing is adjustable by turning it around support axis.

The wing is arranged to provide reciprocating movement in a direction which is closer to a plane which is orthogonal to the water flow than to the direction of the water flow. Accordingly, the rotating axis of the wing has a direction which is closer to the direction of the water flow than to a plane which is orthogonal to the water flow. Preferably, the wing moves in a plane which is orthogonal to the water flow direction and the axis of rotation has the direction of the water flow.

In one embodiment of the invention the converter has either the cover or shaft rotationally fixed and the other part rotating. In another embodiment the converter has a connection for an underwater wing for using water movement to cause rotating force to the hinge-type converter. In a further embodiment the converter has means for turning a wing to a preferred position.

According to one embodiment the converter has hydraulic transmission comprising a high pressure accumulator without pipework built into the shaft to enable receiving high energy peaks and to regulate power production. According to another embodiment the converter a hydraulic transmission comprising low pressure accumulator keeping positive pressure in the system.

In one embodiment the converter has mechanical transmission, which comprises one or more epicyclic gear stages. In a further embodiment the converter is autonomous and has a bilge pump, a sealing flushing pump and/or a hydraulic fluid return pump. In another embodiment the converter is tethered and has external hydraulic fluid recirculation with filtering and leak removal.

In one embodiment of the invention the converter is remote controlled.

According to one embodiment the housings of inductive connector halves are be fixed together in coupling the connector. In a further embodiment the connector is rated for higher frequency than mains frequency.

In one embodiment of the invention the energy plant comprises several adjacent production units, which have underwater wings with asymmetric profiles, wherein the profiles are installed right handed or left handed in relation to the water flow direction, and the underwater wings of two successive production units are opposite handed.

In a further embodiment the converters of the production units are attached to a non-rotating foundation giving support to the stationary part of converter at the bottom, submerged or above the water surface.

In one embodiment of the invention actuator surface angle of attack is adjustable by turning it around support axis. In a further embodiment the wing profiles are in such a position that the wing profile forces are caused by pressure differences caused by flow velocity differences on different sides of the profile. The flow velocity is preferably higher at the back side of the wing than at the front side of the wing, seen from the direction of coming water flow.

In one embodiment of the invention the actuator is turned around its support axis between two positions, a first position is used for the movement of the actuator to a first direction and the second position is used for the movement of the actuator to a second, opposite direction, whereby energy of a stream flowing in constant direction can be utilized. This way the inventive solution can be used in tide and river streams, for example.

### List of drawings

In the following the invention is described with help of the enclosed drawings, in which:
- Figure 1: illustrates an exemplary energy plant according to the invention;
- Figure 2: illustrates a prior art underwater plate, and two exemplary underwater wings according to the invention;
- Figure 3: illustrates a perspective view of an exemplary hinge-type energy converter according to the invention which includes a mechanical gear;
- Figure 4: illustrates a perspective view of an exemplary hinge-type energy converter according to the invention which includes a mechanical gear;
- Figure 5: illustrates an end view of an exemplary generator of a converter according to the invention;
- Figure 6: illustrates a perspective view of an exemplary electric connector pair according to the invention.
- Figure 7: illustrates a cross section view of an exemplary electric connector pair according to the invention.

### Detailed description of exemplary embodiments

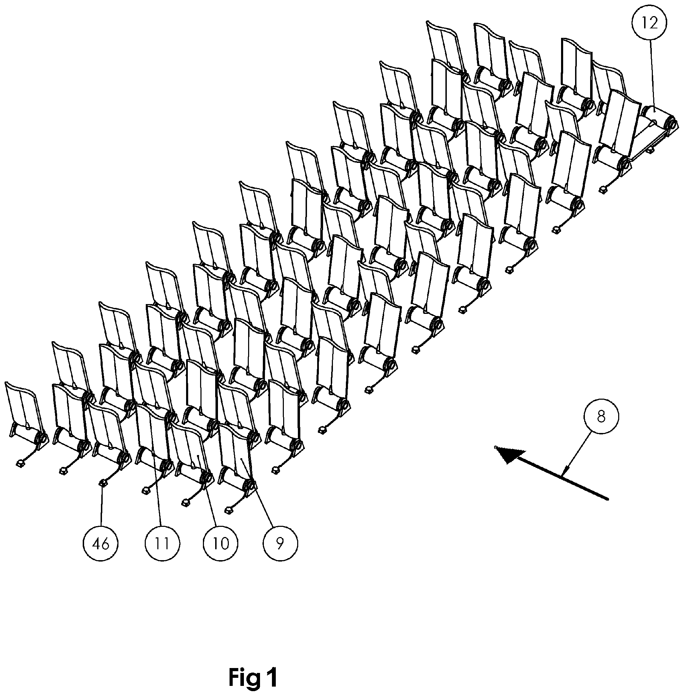

Figure 1 illustrates an exemplary embodiment of an energy plant according to the invention. The energy plant has a matrix of energy production units, each comprising an underwater wing 9, 10, 11, a hinge-type energy converter 12 and an inductive connector 46 which connected to the generator of the converter with a cable. With remote control, an underwater wing or plate can be turned to preferred position. The direction of the water flow is marked with arrow 8. The wings preferably move so that their position alternates between both sides of the vertical position. The efficiency is highest at the vertical position of the wing, and getting lower when the wing gets more apart from the vertical position. This is e.g. because the water flow is smaller at the vicinity of the bottom.

Figure 2 illustrates a prior art underwater plate 3, and two exemplary embodiments of an underwater wing 5, 7 according to the invention. The prior art plate has a surface with a planar shape, whereby the wings according to the invention have a surface of non-planar shape. The form of a wing according to the invention can be wing profile, such as used in propellers, for example. The flow at the suction side travels a longer distance, causing the decrease in pressure and an effective suction, whereby the velocity is reduced at the front side causing an overpressure. The wing thus has a form where water flow mainly causes forces according to reaction principle, as known from e.g. reaction turbines, instead of action/stagnation forces, as known from e.g. impulse turbines.

The wing according to the inventive embodiment includes more efficient actuator surfaces. It is a profile turned approximately along the flow 1 caused by e.g. waves 2, tide or river, to generate forces with both the overpressure and suction on different sizes of the profile. The angle of attack is preferably adjustable, see 6 in Fig 2 and 11 in Fig 1, to adapt to various directions of flow without remarkable reduction in efficiency.

As generally known, majority of pressure induced forces develop at the leading half of any profile. Therefore, one embodiment of the profile according to the invention has two mirrored leading edges.

The wing profile can be by way of example symmetric, sides being mirror images of each other as in profile 7. Opposite ends can have different shapes according to flow conditions in each direction. This solution is preferred for constant or long term flow from same direction when oscillating movement is caused by adjusting the angle of attack between two positions: a first position is used for providing movement of the wing in a first direction, and a second position is used for providing movement of the wing in a second, opposite direction. This way it is possible to use the inventive solution in tide and river stream generators, for example.

The wing profile can also be asymmetric, having different shapes on left and right side as in profile 5. Opposite ends can have different shapes according to flow conditions in each direction. This solution is preferred for naturally oscillating flow like waves. A wing may also be comprised of a set of ribs instead of one uniform part.

Angle of attack can also be adjustable to maximize the rotating moment on the hinge, optimizing energy capture in different flow speeds and flow direction variations. In case of using asymmetric profiles, it is beneficial to use downstream of flow 8, Fig 1, alternately right 9 and left 10 handed profiles to increase the power output from adjacent wing rows.

On both profiles, it should be noted that the angle of attack and profile can vary along the wing due to flow speed differences along it. The angle of attack of the wings is preferably higher near to the converter, due to the smaller speed of water flow, than at the distant end from the converter. This can be arranged in the permanent form of the wings, or dynamical control. The dynamic adjustment of the angle of attack can thus be done either by rotating the entire profile or parts of it.

On areas where average flow (constant or reciprocating) has near constant direction, the units can be mounted stationary. On areas where direction of flow can change remarkably like waves coming in due to different weather conditions in spring and autumn storms, the units can be mounted on lockable carousel foundations. Their orientation is then adjustable according to the main expected flow direction.

If average flow direction is not known, it can be measured either with external sensors and direction data being fed into the units or with local pressure or flow sensors on the wing or hinge foundation. This measurement is not essential, the units can sense average flow by searching for angle of attack which causes the wing to remain in vertical position.

In reciprocating flow, e.g. waves, the wing can be adjusted to constant angle of attack. It is however beneficial to do minor adjustments to the angle of attack during rotation, to maximize the hinge turning moment. This can be done either according to prescribed angular data or by searching for maximum moment with small temporary variations in angle of attack. The turning moment is measured from shear deformation with strain gauges on the stationary part of the hinge and/or pressure sensor on the hydraulic fluid.

In almost stationary flow, angle of attack is adjusted to both sides of neutral angle causing the wing to stand in vertical position. In this case, the angle of attack has to be changed at the end of each movement to reverse the rotation. Small adjustments to angle of attack during rotation is beneficial and will be done as in resiprocating case.

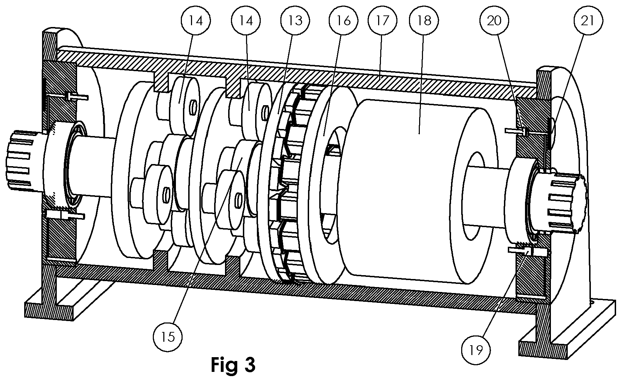

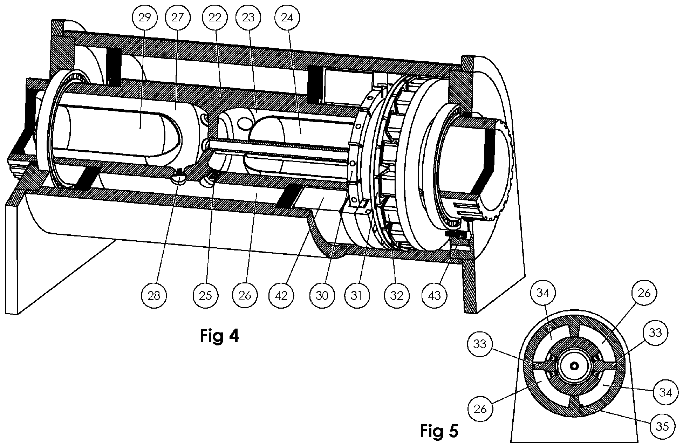

Figures 3-5 illustrate an exemplary embodiments of a hinge-type energy converter according to the invention. The converter of Figure 3 has a mechanical gear, and the converter of Figure 4 has a hydraulic gear. The hinge-type converter includes a transmission increasing rotational speed to drive electricity generator rotor 13. Transmission can be done with either single or multiple gears stages 14, or using hydraulic drive as shown in Figure 4. Epicyclic stages are preferred due to their long life and force balance. Rotor is attached to the fastest rotating stage, in the shown arrangement to 2^{nd} stage sun gear 15. Stator 16 is attached to stationary part of hinge, being cover 17 in the shown arrangement. It should be noted that either the shaft or cover can be arranged to be stationary, the other being rotating member. Electricity is converted to DC, and chopped to correct voltage and frequency with inverter 18. Bilge pump 19 in Fig 3 and 43 in Fig 4 can be mechanically or electrically driven. A flushing pump 20 soaks up water through filter 21 to create rinsing flow to outermost sealing.

In hydraulic hinge-type converter, the shaft 22, Fig 4, includes the high pressure fluid volume 23 with gas bladder 24 forming a hydraulic accumulator thus enabling the high pressure side to receive temporarily high flow peaks through inlet valves 25 from chambers 26. No pipework or hoses are needed, thus reducing radically the high pressure flow friction.

Low pressure volume can be arranged into the shaft 27 or around it, depending on the arrangement. Being in the shaft, the hydraulic fluid is fed to the expanding chambers 34 directly through valves 28. Low pressure volume includes also a gas bladder 29 to compensate for volume changes keeping positive pressure against surrounding water. It should be noted, that either the shaft or the cover can be the stationary member, and the other one being the rotating one.

In rotating cover arrangement, a hydraulic motor or turbine 30 running an electric generator rotor 31 can be either inside of the shaft next to the high pressure volume, or between the shaft and cover as shown. In stationary cover arrangement, the generator is preferably located between the shaft and cover, although other location, such as inside the shaft, is possible. Generator stator 32 is attached to the fixed part of hinge.

The shaft, the cover, the transmission and the generator are preferably arranged coaxial in the converter in order to facilitate the integration of the assembly.

A possible additional use for the hinge is in producing pressurized hydraulic fluid to external generation unit with local accumulators filtering the power peaks thus regulating flow. Pressure accumulators are pressurized with a fluid which boils in the functional pressure and temperature, thus keeping accumulator pressure constant. One such fluid is carbon dioxide.

Hydraulic fluid is pressurized in variable volume chambers between the shaft and cover 26, Fig 5. There are 1 or more chamber pairs separated by vanes 33, every second attached to the shaft and the others to the cover. Seeking for long and reliably function, the arrangement is symmetric having two or more chamber pairs. Hydraulic fluid is cooled through the cover wall.
Bilge pumping and sealing rinsing is arranged with channel, pumps and piping as in Fig 3. Hydraulic fluid leakage is fed back to system with pump through channel and pipe 35.

Electricity generated with the generator is converted to DC, then chopped to suitable voltage and frequency for further transfer with inverter. External connections (electrical power line, remote sensing and controls) are attached to stationary parts of hinges.

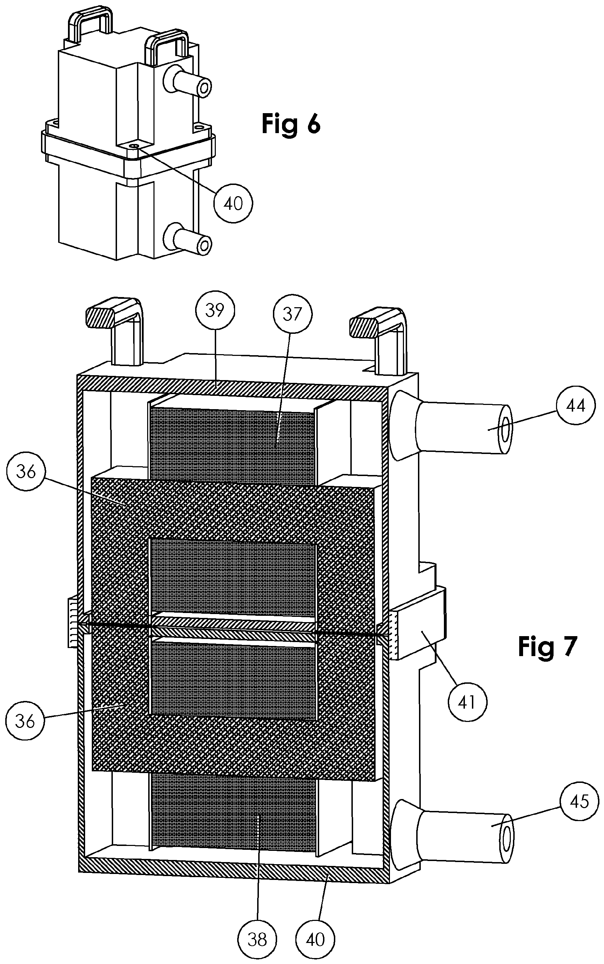

Figures 6 and 7 illustrate an exemplary embodiment of an induction connector according to the invention. Using an induction connector 46 units can be safely connected to and separated from plant feeding network while running. Cable from production unit comes to watertight penetrator 44 and cable to production energy collecting point goes from watertight penetrator 45. Connector is preferably equipped with quick fixing clamps 41. The connector consists of two parts each consisting one half of ferromagnetic core 36 which have windings for production unit 37 and plant collecting cable 38. Cores are enclosed in watertight housings 39 and 40. It is possible that the cores or their coatings are made of material which withstands water. In this case the end surfaces of the cores can be outside the watertight housings, whereby the core surfaces of the connector halves can be placed towards each other with minimal gap between the cores. This way the transfer of electrical energy is efficient. After fixing the quick securing clamps, air gap between connectors is dried with air or other gas blowing inside flexible collar 41.

An Inverter unit of the converter senses network frequency and phase, synchronizing output accordingly.

The apparatus can also be inverted to run the generator as a motor generating hydraulic power. With this function the flow capturing surfaces can be turned remotely down to bottom when needed, instead of letting them idle.

It must be noted that above only some embodiments of the solution according to the invention have been described. The principle of the invention can naturally be modified within the scope of protection determined by the patent claims, e.g. in details of implementation and areas of use.

It is also to be noted that the underwater wing, the hinge-type converter apparatus and the induction connector can also be applied separately and independently in different types of wave power plants.

It should further be noted that the energy plant according to the invention preferably utilizes water movements caused waves, but it may alternatively or additionally utilize water movements caused by tide, river stream etc.

## Claims

1. An underwater wing (9,10,11) of an energy plant for capturing energy from water flow with reciprocating direction into reciprocating motion of the underwater wing, wherein the underwater wing (9,10,11) has a non-planar profile, the underwater wing is arranged to provide reciprocating movement in a direction which is closer to a plane which is orthogonal to the water flow than to the direction of the water flow wherein the underwater wing is asymmetric and wherein the underwater wing profile has two leading edges mirrored at the opposite sides of the wing profile.

2. The wing (9,10,11) according to claim 1, **characterised in that** the underwater wing (9,10,11) has attachment means which allow the underwater wing surface angle of attack to be adjustable by turning it around support axis.

3. The wing (9,10,11) according to claim 1, **characterised in that** the underwater wing (9,10,11) has a profile in which a flowing water causes reaction forces that are larger than action forces.

4. A converter for converting mechanical energy of reciprocating motion into electrical energy in an energy plant utilizing energy of water movement, **characterised in that** the converter is a hinge-type converter (12) comprising a cover and a shaft within the cover, which shaft and cover can rotate in relation to each other, the converter further comprising:
- a mechanical or hydraulic transmission for increasing the relative speed of rotation;
- an electric generator driven by said rotation, and
- an underwater wing (9,10,11) of claim 1.

5. The converter according to claim 4, **characterised in that** the converter has either the cover or shaft rotationally fixed and the other part rotating.

6. The converter according to claim 4 or 5, **characterised in that** it has connection for an underwater wing (9,10,11) for using water movement to cause rotating force to the hinge-type converter.

7. The converter according to any of claims 4-6, **characterised in that** it has means for turning a wing (9,10,11) to a preferred position.

8. The converter according to any of claims 4-7, **characterised in that** it has hydraulic transmission comprising a high pressure accumulator without pipe- work built into the shaft to enable receiving high energy peaks and to regulate power production.

9. The converter according to any of claims 4-8, **characterised in that** it has hydraulic transmission comprising low pressure accumulator keeping positive pressure in the system.

10. The converter according to any of claims 4-9, **characterised in that** it has mechanical transmission, which comprises one or more epicyclic gear stages.

11. The converter according to any of claims 4-10, **characterised in that** it is autonomous and has a bilge pump, a sealing flushing pump and/or a hydraulic fluid return pump.

12. The converter according to any of claims 4-10, **characterised in that** it is tethered and has external hydraulic fluid recirculation with filtering and leak removal.

13. The converter according to any of claims 4-12, **characterised in that** it is remote controlled.

14. An energy plant utilizing water movements caused by water waves or currents for providing electrical energy, comprising at least one energy production unit, the energy production unit comprising an underwater actuator for capturing mechanical energy from water movements into reciprocating motion of the actuator, and an energy converter for converting the mechanical energy into electrical energy when the underwater actuator applies a rotational force to the converter, **characterised in that** the production unit comprises at least one of:
- an underwater wing (9,10,11) according to any of claims 1-3 as the actuator; and
- a hinge-type energy converter (12) according to any of claims 5-13.

15. The energy plant according to claim 14, **characterised in that** the energy plant comprises several adjacent production units, which have underwater wings (9, 10, 11) with asymmetric profiles, wherein the profiles are installed right handed or left handed in relation to the water flow direction, and the underwaterwings (9,10,11) of two successive production units are opposite handed.

16. The energy plant according to claim 14 or 15, **characterised in that** the converters of the production units are attached to a non-rotating foundation giving support to the stationary part of hinged unit part at the bottom, submerged or above the water surface.

17. The energy plant according to any of claims 14-16, **characterized in that** the wing profiles (9,10,11) of the plant are in such positions that the wing profile forces are caused by pressure differences caused by velocity differences on different sides of the profile.

18. The energy plant according to any of claims 14-17, **characterized in that** the wing profiles (9,10,11) of the plant have such forms and are in such positions that the force component caused by the water flow on the wing profile is smaller in the direction of the water flow than the force component in the direction which is orthogonal to the direction of the water flow.

## Patentansprüche

1. Unterwasserflügel (9, 10, 11) einer Energieanlage zum Gewinnen von Energie aus einer Wasserströmung mit hin- und hergehender Richtung in eine Hin- und Herbewegung des Unterwasserflügels, wobei der Unterwasserflügel (9, 10, 11) ein nicht planes Profil aufweist, **dadurch gekennzeichnet, dass** der Unterwasserflügel dazu angeordnet ist, eine Hin- und Herbewegung in einer Richtung bereitzustellen, die einer Ebene, die rechtwinklig zu der Wasserströmung ist, näher ist als der Richtung der Wasserströmung, wobei der Unterwasserflügel asymmetrisch ist und wobei das Profil des Unterwasserflügels zwei Vorderkanten aufweist, die an den gegenüberliegenden Seiten des Flügelprofils gespiegelt sind.

2. Flügel (9, 10, 11) nach Anspruch 1, **dadurch gekennzeichnet, dass** der Unterwasserflügel (9, 10, 11) Befestigungsmittel aufweist, die gestatten, dass der Angriffswinkel der Oberfläche des Unterwasserflügels durch Drehen desselben um eine Tragachse herum anpassbar ist.

3. Flügel (9, 10, 11) nach Anspruch 1, **dadurch gekennzeichnet, dass** der Unterwasserflügel (9, 10, 11) ein Profil aufweist, bei dem strömendes Wasser Reaktionskräfte bewirkt, die größer sind als Aktionskräfte.

4. Wandler zum Umwandeln mechanischer Energie einer Hin- und Herbewegung in elektrische Energie in einer Energieanlage, die Energie einer Wasserbewegung nutzt, **dadurch gekennzeichnet, dass** der Wandler ein Wandler (12) vom Scharniertyp ist, der eine Abdeckung und eine Welle innerhalb der Abdeckung umfasst, wobei die Welle und die Abdeckung sich bezogen aufeinander drehen können, wobei der Wandler ferner umfasst:
- eine mechanische oder hydraulische Kraftübertragung zum Erhöhen der relativen Drehzahl;
- einen elektrischen Generator, der durch die Drehung angetrieben wird, und
- einen Unterwasserflügel (9, 10, 11) nach Anspruch 1.

5. Wandler nach Anspruch 4, **dadurch gekennzeichnet, dass** bei dem Wandler entweder die Abdeckung oder die Welle drehfest und der andere Teil drehend ist.

6. Wandler nach Anspruch 4 oder 5, **dadurch gekennzeichnet, dass** er einen Anschluss für einen Unterwasserflügel (9, 10, 11) aufweist, um eine Wasserbewegung dazu zu benutzen, den Wandler vom Scharniertyp mit Drehkraft zu beaufschlagen.

7. Wandler nach einem der Ansprüche 4-6, **dadurch gekennzeichnet, dass** er Mittel zum Drehen eines Flügels (9, 10, 11) in eine bevorzugte Stellung aufweist.

8. Wandler nach einem der Ansprüche 4-7, **dadurch gekennzeichnet, dass** er eine hydraulische Kraftübertragung aufweist, die einen Hochdruckspeicher ohne in die Welle eingebaute Leitungen umfasst, um ein Empfangen hoher Energiespitzen zu ermöglichen und die Stromproduktion zu regeln.

9. Wandler nach einem der Ansprüche 4-8, **dadurch gekennzeichnet, dass** er eine hydraulische Kraftübertragung aufweist, die einen Niederdruckspeicher umfasst, der einen Überdruck in dem System aufrechterhält.

10. Wandler nach einem der Ansprüche 4-9, **dadurch gekennzeichnet, dass** er eine mechanische Kraftübertragung aufweist, die eine oder mehrere Planetenradstufen umfasst.

11. Wandler nach einem der Ansprüche 4-10, **dadurch gekennzeichnet, dass** er autonom ist und eine Lenzpumpe, eine Abdichtungsspülpumpe und/oder eine Hydraulikfluidrückförderpumpe aufweist.

12. Wandler nach einem der Ansprüche 4-10, **dadurch gekennzeichnet, dass** er angebunden ist und eine externe Hydraulikfluidrückführung mit Filterung und Leckbeseitigung aufweist.

13. Wandler nach einem der Ansprüche 4-12, **dadurch gekennzeichnet, dass** er ferngesteuert ist.

14. Energieanlage, die Wasserbewegungen nutzt, die durch Wasserwellen oder -strömungen bewirkt wird, um elektrische Energie bereitzustellen, und die wenigstens eine Energieerzeugungseinheit umfasst, wobei die Energieerzeugungseinheit umfasst: einen Unterwasseraktuator zum Gewinnen mechanischer Energie aus Wasserbewegungen in eine Hin- und Herbewegung des Aktuators und einen Energiewandler zum Umwandeln der mechanischen Energie in elektrische Energie, wenn der Unterwasseraktuator den Wandler mit einer Drehkraft beaufschlagt, **dadurch gekennzeichnet, dass** die Erzeugungseinheit wenigstens eines der Folgenden umfasst:
- einen Unterwasserflügel (9, 10, 11) nach einem der Ansprüche 1-3 als den Aktuator; und
- einen Energiewandler (12) vom Scharniertyp nach einem der Ansprüche 5-13.

15. Energieanlage nach Anspruch 14, **dadurch gekennzeichnet, dass** die Energieanlage mehrere benachbarte Erzeugungseinheiten umfasst, die Unterwasserflügel (9, 10, 11) mit asymmetrischen Profilen aufweisen, wobei die Profile bezogen auf die Strömungsrichtung des Wassers rechtsläufig oder linksläufig installiert sind und die Unterwasserflügel (9, 10, 11) von zwei aufeinander folgenden Erzeugungseinheiten gegenläufig sind.

16. Energieanlage nach Anspruch 14 oder 15, **dadurch gekennzeichnet, dass** die Wandler der Erzeugungseinheiten an einem sich nicht drehenden Fundament befestigt sind, welches den stationären Teil des Scharniereinheitsteils am Boden, untergetaucht oder über der Wasseroberfläche trägt.

17. Energieanlage nach einem der Ansprüche 14-16, **dadurch gekennzeichnet, dass** die Flügelprofile (9, 10, 11) der Anlage sich in einer derartigen Stellung befinden, dass die Flügelprofilkräfte durch Druckunterschiede bewirkt werden, die durch Geschwindigkeitsunterschiede auf unterschiedlichen Seiten des Profils bewirkt werden.

18. Energieanlage nach einem der Ansprüche 14-17, **dadurch gekennzeichnet, dass** die Flügelprofile (9, 10, 11) der Anlage derartige Formen aufweisen und sich in derartigen Stellungen befinden, dass die Kraftkomponente, mit der das Flügelprofil durch die Wasserströmung beaufschlagt wird, in der Richtung der Wasserströmung kleiner ist als die Kraftkomponente in der Richtung, die rechtwinklig zur Richtung der Wasserströmung ist.

## Revendications

1. Aile sous-marine (9, 10, 11) d'une installation de production d'énergie, destinée à capturer de l'énergie à partir d'un flux d'eau avec une direction alternative dans le mouvement alternatif de l'aile sous-marine, l'aile sous-marine (9, 10, 11) présentant un profil non-plan,
**caractérisée en ce que** l'aile sous-marine est conçue pour fournir un mouvement alternatif dans une direction plus proche d'un plan orthogonal au flux d'eau que la direction du flux d'eau, l'aile sous-marine étant asymétrique et le profil de l'aile sous-marine présentant deux bords avant en miroir sur les côtés opposés du profil d'aile.

2. Aile (9, 10, 11) selon la revendication 1, **caractérisée en ce que** l'aile sous-marine (9, 10, 11) comporte des moyens de fixation permettant de régler l'angle d'attaque de la surface de l'aile sous-marine en faisant tourner celle-ci autour d'un axe de support.

3. Aile (9, 10, 11) selon la revendication 1, **caractérisée en ce que** l'aile sous-marine (9, 10, 11) présente un profil dans lequel une eau en écoulement entraîne des forces de réaction plus grandes que des forces d'action.

4. Convertisseur destiné à convertir une énergie mécanique de mouvement alternatif en énergie électrique dans une installation de production d'énergie utilisant l'énergie du mouvement de l'eau, **caractérisé en ce que** le convertisseur est un convertisseur du type charnière (12) comprenant un couvercle et un arbre à l'intérieur du couvercle, ledit arbre et ledit couvercle pouvant tourner l'un par rapport à l'autre, le convertisseur comprenant en outre :
- une transmission mécanique ou hydraulique destinée à augmenter la vitesse de rotation relative ;
- un générateur électrique entraîné par ladite rotation, et
- une aile sous-marine (9, 10, 11) selon la revendication 1.

5. Convertisseur selon la revendication 4, **caractérisé en ce que** le convertisseur comporte soit un couvercle soit un arbre fixe en rotation et l'autre partie rotative.

6. Convertisseur selon la revendication 4 ou 5, **caractérisé en ce qu'**il présente une connexion pour une aile sous-marine (9, 10, 11) pour utiliser le mouvement de l'eau afin de fournir une force de rotation au convertisseur de type charnière.

7. Convertisseur selon l'une quelconque des revendications 4 à 6, **caractérisé en ce que** celui-ci comporte des moyens pour faire tourner une aile (9, 10, 11) vers une position préférée.

8. Convertisseur selon l'une quelconque des revendications 4 à 7, **caractérisé en ce que** celui-ci comporte une transmission hydraulique comprenant un accumulateur haute pression sans tuyauterie intégré dans l'arbre pour permettre la réception de pics d'énergie élevés et pour réguler la production électrique.

9. Convertisseur selon l'une quelconque des revendications 4 à 8, **caractérisé en ce que** celui-ci comporte une transmission hydraulique comprenant un accumulateur basse pression maintenant une pression positive dans le système.

10. Convertisseur selon l'une quelconque des revendications 4 à 9, **caractérisé en ce que** celui-ci comporte une transmission mécanique comprenant un ou plusieurs étages d'engrenage épicycliques.

11. Convertisseur selon l'une quelconque des revendications 4 à 10, **caractérisé en ce que** celui-ci est autonome et comporte une pompe d'assèchement, une pompe de rinçage d'étanchéité et/ou une pompe de retour de fluide hydraulique.

12. Convertisseur selon l'une quelconque des revendications 4 à 10, **caractérisé en ce que** celui-ci est attaché et comporte un système de recyclage de fluide hydraulique externe avec filtrage et élimination de fuites.

13. Convertisseur selon l'une quelconque des revendications 4 à 12, **caractérisé en ce que** celui-ci est commandé à distance.

14. Installation de production d'énergie utilisant des mouvements de l'eau causés par des vagues ou des courants d'eau pour fournir une énergie électrique, comprenant au moins une unité de production d'énergie, l'unité de production d'énergie comprenant un actionneur sous-marin destiné à capturer de l'énergie mécanique à partir de mouvements d'eau dans un mouvement alternatif de l'actionneur, et un convertisseur d'énergie destiné à convertir l'énergie mécanique en énergie électrique lorsque l'actionneur sous-marin applique une force de rotation au convertisseur, **caractérisée en ce que** l'unité de production comprenat au moins l'un parmi :
- une aile sous-marine (9, 10, 11) selon l'une quelconque des revendications 1 à 3 en tant qu'actionneur ; et
- un convertisseur du type charnière (12) selon l'une quelconque des revendications 5 à 13.

15. Installation de production d'énergie selon la revendication 14, **caractérisée en ce que** l'installation de production d'énergie comprend plusieurs unités de production adjacentes, lesquelles comportent des ailes sous-marines (9, 10, 11) avec des profils asymétriques, dans laquelle les profils sont installés du côté droit ou du côté gauche par rapport à la direction d'écoulement de l'eau, et les ailes sous-marines (9, 10, 11) de deux unités de production successives se trouvent sur des côtés opposés.

16. Installation de production d'énergie selon la revendication 14 ou 15, **caractérisée en ce que** les convertisseurs des unités de production sont fixées à une fondation non rotative apportant un support à la partie immobile d'une partie d'unité articulée au fond, sous l'eau ou au-dessus de la surface de l'eau.

17. Installation de production d'énergie selon l'une quelconque des revendications 14 à 16, **caractérisée en ce que** les profils d'aile (9, 10, 11) de l'installation de production se trouvent dans des positions telles que des forces de profil d'aile sont causées par des différences de pression causées par des différences de vitesse sur des côtés différents du profil.

18. Installation de production d'énergie selon l'une quelconque des revendications 14 à 17, **caractérisée en ce que** les profils d'aile (9, 10, 11) de l'installation de production présentent des formes telles et se trouvent dans des positions telles que la composante de force exercée par le flux d'eau sur le profil d'aile est plus faible dans la direction du flux d'eau que la composante de force dans la direction orthogonale à la direction du flux d'eau.
